# EUROPEAN PATENT APPLICATION

(11) **EP 2 629 484 A1**
(43) Date of publication of application: **21.08.2013**
(21) Application number: 13155386.9
(22) Date of filing: 15.02.2013
(51) Int. Cl.: H04L 29/06

(54) **Resolving device specific identifiers to a user identifier to initiate a dialog establishment with devices of a user**

(30) Priority: 16.02.2012 US 201213397911
(71) Applicant: Research In Motion Limited, Waterloo, ON N2L 3W8 (CA)
(72) Inventor: Kramarenko, Valentina Iqorevna, Mississauga, Ontario L4W 0B5 (CA); Rozinov, Boris, Mississauga, Ontario L4W 0B5 (CA); Williams, Matthew David Douglas, Mississauga, Ontario L4W 0B5 (CA); Pang, Swee Tuan, Mississauga, Ontario L4W 0B5 (CA)
(74) Representative: Patel, Binesh

(57) **Abstract**

Systems and methods are described that allow a calling party to establish a dialog, or attempt to establish a dialog, with multiple devices associated with the party being called, even when the calling party does not know a user identifier associated with the multiple devices. A calling party may provide a device specific identifier, which can be resolved to a user identifier associated with the multiple devices.

## Description

### TECHNICAL FIELD

The current description relates to establishing a dialog between devices, and in particular to resolving device specific identifiers to locate devices associated with a user.

### BACKGROUND

A dialog for exchanging data, including audio and audio video communications, can be established between two users, or more particularly between user devices. In order to establish the dialog, a calling party sends an initiation request to a user identifier. If Session Initiation Protocol (SIP) is used to establish the dialog, the initiation request may include a SIP address of the callee and can be sent to a SIP server that provides functionality for establishing a session between devices. The callee may have multiple devices at which he/she may be reached, for example an office phone, a mobile phone, and a softphone provided on a laptop computer. The user may register the different devices with the SIP server, so that when a dialog is to be established with the callee, the SIP server can fork the initiation request to each of the registered devices of the user.

While the SIP infrastructure functions well for contacting a user at multiple devices, it requires that the calling party know the public user identifier of the callee associated with the multiple devices. A calling party may not have access to the user identifier of the callee party, but have a device identifier of one of the user's devices. However, the device identifier can only be used for establishing a dialog with the identified device; that is any additional devices of the user associated with the public user identifier will not be included in the attempt of establishing the dialog.

Therefore there is a need for an improved system and method of establishing a dialog between parties.

### SUMMARY

In accordance with the present disclosure there is provided a method of initiating a dialog establishment with a plurality of devices comprising: receiving from an initiating device a destination device identifier in a request to establish the dialog; retrieving a destination user identifier linked with the destination device identifier; modifying the request by replacing the destination device identifier with the destination user identifier; and routing the modified request to one or more destination devices registered with the destination user identifier.

In accordance with the present disclosure there is further provided a computing system for initiating a dialog establishment with a plurality of devices comprising: a memory for storing instructions; and a processor for executing the instructions. The instructions when executed configuring the computing system to: receive from an initiating device a destination device identifier in a request to establish the dialog; retrieve a destination user identifier linked with the received destination device identifier; modify the request by replacing the destination device identifier with the destination user identifier; and route the modified request to one or more destination devices registered with the destination user identifier.

In accordance with the present disclosure there is further provided a non-transitory computer readable memory containing instructions for execution by a computer device for providing a method of initiating a dialog establishment with a plurality of devices comprising: receiving from an initiating device a destination device identifier in a request to establish the dialog; retrieving a destination user identifier linked with the received destination device identifier; modifying the request by replacing the destination device identifier with the destination user identifier; and routing the modified request to one or more destination devices registered with the destination user identifier.

### BRIEF DESCRIPTION OF THE DRAWINGS

Further features and advantages of the present disclosure will become apparent from the following detailed description, taken in combination with the appended drawings, in which:
Figure 1 depicts components of a system for establishing a dialog between electronic devices;
Figure 2 depicts an environment for initiating a dialog establishment with a plurality devices using a device identifier;
Figure 3 depicts a message flow of initiating a dialog establishment with a plurality of devices;
Figure 4 depicts illustrative components in an environment for initiating a dialog establishment with a plurality of devices;
Figure 5 depicts a method of initiating a dialog establishment with a plurality of devices; and
Figure 6 depicts an environment in which the dialog establishment described above may be implemented;

### DETAILED DESCRIPTION

Electronic devices can be used to establish a communication session with another electronic device. The electronic devices may comprise a desktop computer, a laptop computer, a portable electronic device, a mobile phone or smartphone, or a tablet computer which provides audio and/or video communications functions. The dialog between the two devices may be used for transmitting audio, video, audio/video communications, messages, and/or data. An intermediary server may mediate the establishment of the dialog or session between two devices. Once the dialog or session is established, it can be used to exchange data such as audio/video data directly between the two devices. A session initiation protocol (SIP) may be used in establishing the dialog between the two electronic devices. SIP utilizes a user identifier of the party being called, also referred to as the destination or target, in order to locate one or more devices of the user that may be contacted to attempt to establish the dialog with. The use of the user identifier in establishing the dialog allows a user to associate multiple devices with the single user identifier. As a result, when a calling party attempts to contact the destination user associated with the user identifier, each of the devices registered with the user identifier can be contacted. The user identifier may be a public user identifier so that other parties can discover the user identifier.

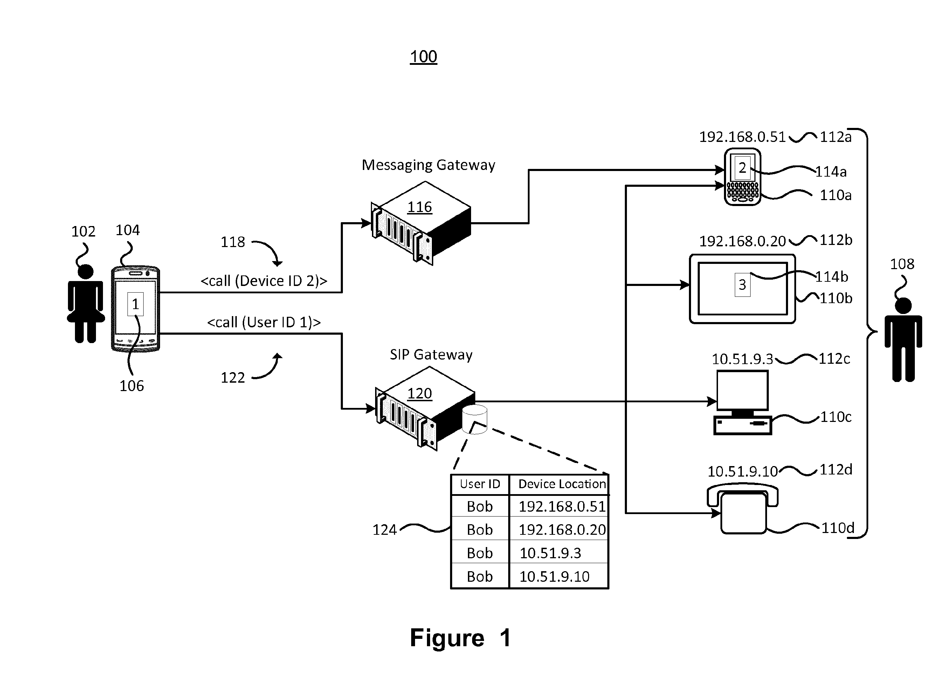

Figure 1 depicts components of a system for establishing a dialog between electronic devices. The environment 100 comprises a first user 102 and user device 104, depicted as a smartphone. The user device 104 may be associated with a unique device identifier 106, which as described further below can be used for establishing a dialog directly with the user device 104. The device identifier may be a personal identification number (PIN) used to uniquely identify the device. For example the PIN may an eight character hexadecimal identification number assigned to each device and may be locked to each specific device. The environment 100 further comprises a second user 108 that is associated with a plurality of devices 110. As depicted, the user 108 may have a smartphone 110a, a tablet 110b, a desktop 110c, and a desk phone 110d. Each of the user's devices 110 may be associated with a contact address 112a, 112b, 112c, 112d that can be used to communicate with the respective device. Each of the contact addresses 112a, 112b, 112c, 112d are depicted as an Internet Protocol (IP) address, although it is contemplated that other contact addresses may be used based on a communication protocol used to communicate with a particular device. One or more of the user devices 110 may have an associated device identifier. As depicted, smartphone 110a and tablet device 110b each are associated with a respective device identifier 114a, 114b, however the devices 110c and 110d do not have a device identifier.

As depicted, communication may be established between two devices using an intermediary server. Two different intermediary servers are depicted. It is noted that the two different servers are displayed as separate servers for the clarity of the description; however, it is contemplated that the functionality of both servers could be combined in a single server. A messaging gateway 116 may provide functionality for establishing communication between two devices using a device identifier. As depicted an initiating device 104 may send an initiation request 118 to the messaging server 116. The initiation request 118 includes the destination device identifier, namely '2', of the device to be contacted. The initiation request 118 may also include additional information for communicating with the identified device. The messaging gateway 116 receives the initiation request 118 and determines the contact address of the destination device having the device identifier of the initiation request 118. The messaging gateway 116 may then forward the initiation request 118 to the device, which in the example depicted in Figure 1 would be device 110a. A dialog may then be established between the two devices 104, 110a and used to exchange data. Alternatively, the device 104 could include desired information in the initial request message, such as a text message or instant message, which may then be forwarded to the destination device 110a without requiring a dialog be established.

The second intermediary server is a SIP server 120 that provides SIP functionality for establishing a communication between two devices. User 108 may have an associated user identifier, for instance, a SIP address, or an e-mail address, which can be used by calling parties to contact the user 108. The user identifier may be a public user identifier, allowing the contact information of the user to be determined by calling parties. In contrast to the device identifier that is used to identify a particular device, the user identifier is associated with the user 108. The user 108 may register zero or more devices with the SIP server 120. When the user 108 registers a device with the SIP server 120, the SIP server binds the contact address of the device with the user identifier.

The user 102 may attempt to establish a dialog with user 108 by sending an initiation request 122 to the SIP server 120. The initiation request 122 includes the user identifier of the user 108 being contacted. The SIP server 120 receives the initiation request and determines one or more contact addresses of devices registered at the SIP server by the user 108. As depicted, the SIP server may maintain a table 124, or other data structure that stores the user's ID and the contact addresses of any devices that have been registered by the user. The SIP server 120 uses the table 124 and determines contact addresses of the user identifier, and forks the initiation request to each of the destination devices 110a, 110b, 110c, 110d at the respective contact addresses 112a, 112b, 112c, 112d. When the destination devices 110 receive the respective forked initiation request, they may indicate that a dialog is attempting to be established, for example by playing a ring tune or other notification. The destination user 108 may accept the dialog establishment on one of the devices, causing the dialog to be established between the two devices, and causing the attempted dialog establishment to be terminated on the other devices.

Although the environment 100 described above allows a user to establish a dialog with a specific device using a device identifier as well as allowing the user to establish a dialog with one of a plurality of devices registered with a user identifier by using the user identifier. However, it is not possible to establish a dialog with one of a plurality of the registered devices using a device identifier. That is, in environment 100, if a dialog is established using a device identifier, only the particular device will be contacted, and not all of the devices registered by the user. A user may have access to only the device identifier of a user; and not to the user's user identifier. However, it may be desirable to attempt to establish a dialog with all of the registered devices of the user having the device with the particular device identifier. As described further, the device identifiers may be used to establish a dialog with all devices registered by a user if the user identifier is publicly available, or if the user has registered their user identifier with an appropriate resolution server.

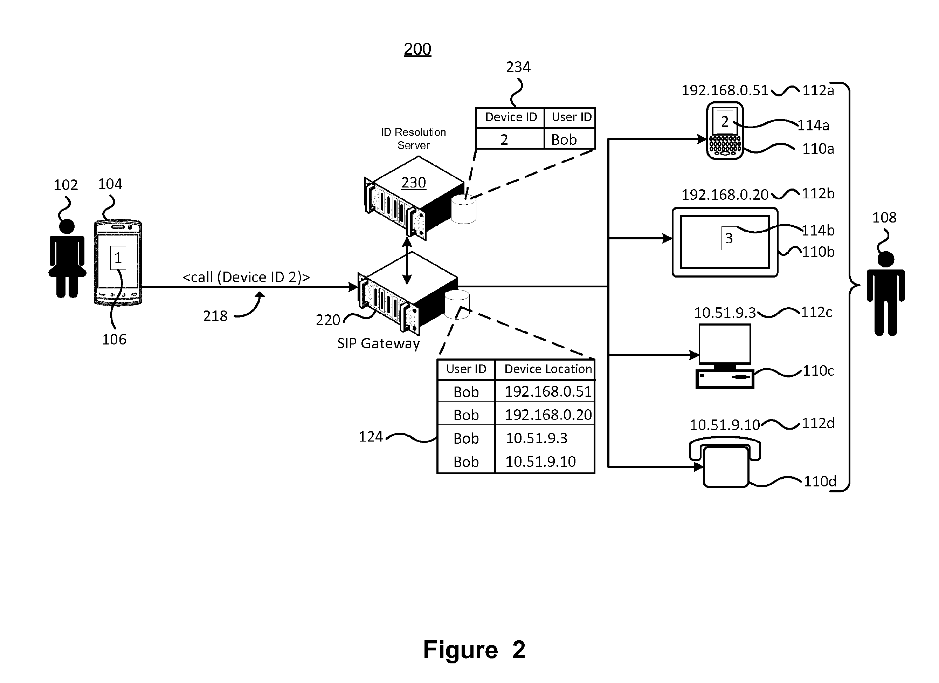

Figure 2 depicts an environment for initiating a dialog establishment with a plurality destination devices using a device identifier. The environment 200 includes users 102, 108 and associated user devices 104, 110 as described above with reference to Figure 1 and as such are not described further. The environment 200 includes a SIP server 220 that can mediate the establishment of a communication session between two devices according to SIP. However, unlike the SIP server 120 described above, the SIP server 220 can initiate a communication session establishment process with each of the destination devices a user has registered with the SIP server 220, regardless of if the initiating party 102 uses the destination user identifier or a device identifier of a destination device of the user. An initiating device 104 sends an invitation request message 218 to the SIP server 220. The initiation request message 218 may include a destination device identifier of a device of the user to be contacted. The device identifier could be associated with the destination user in a contact list and may be the only contact information the initiating user has for the destination user, for example in an address book. The device identifier may be associated with a private identity of the user that is generally not publicly available, unless the user makes the private identity publicly available. The initiation request message 218 may also include identification that the contact information in the initiation request message 218 is a device identifier.

The SIP server 220 receives the initiation request 218 from the initiating device 104 and retrieves the destination device identifier from the initiation request. The SIP server communicates with an identifier resolution server 230 in order to resolve the destination device identifier to a destination user identifier. As depicted, the ID resolution server 230 includes a table 234, or other similar structure, for linking a device identifier with a user identifier. It is noted that a user identifier, which may for example be a user name or e-mail address, may be associated with a plurality of device identifiers; however, a device identifier is only linked to a single user identifier. Further it is noted that if the user identifier is not publicly available, it may be desirable, from a privacy perspective, to require the user to register the user identifier with the resolution server to allow a device identifier to be resolved to the user identifier.

The SIP server 220 communicates the destination device identifier to the ID resolution server 230 that determines the destination user identifier linked to the destination device identifier. The determined destination user identifier is returned from the ID resolution server 230 to the SIP server 220, which then determines the contact addresses of destination devices that have been registered with the received destination user identifier. The SIP server 220 may then fork the initiation request message to each of the determined contact addresses. The destination user may accept the dialog establishment on one of the destination devices 114, causing a dialog to be established between the two devices. Once the dialog is established between the two devices, a media exchange session may be established directly between the two devices and audio, video or audio/video data can be transferred directly between the two devices, for example using a Real-time Transport Protocol (RTP).

The SIP server 220 allows multiple destination devices to be contacted when attempting to establish a dialog. A calling party may specify either a destination user identifier or a destination device identifier in an initial dialog establishment message. The destination device identifier may be resolved to the destination user identifier, which can then be used to contact one or more destination devices the user has registered with the destination user identifier. It may be desirable to allow a calling party to indicate whether or not the SIP server 220 should attempt to resolve the destination device identifier to the destination user identifier or not. A flag indicating whether or not to resolve a device identifier may be included in the initial dialog establishment message 218. If the flag indicates that the device identifier should be resolved the dialog may be established by first resolving the user identifier. If the flag indicates that the device identifier should not be resolved, the dialog may be established by contacting only the device associated with the device identifier.

The above environment 200 has described the SIP server and the ID resolution server as being separate servers. It is contemplated that the functionality of the ID resolution server could also be provided by the SIP server itself. Further, it will be appreciated that the communication between devices has been simplified. For example, the communication may include communicating with additional intermediary network devices, including one or more additional or alternative SIP servers.

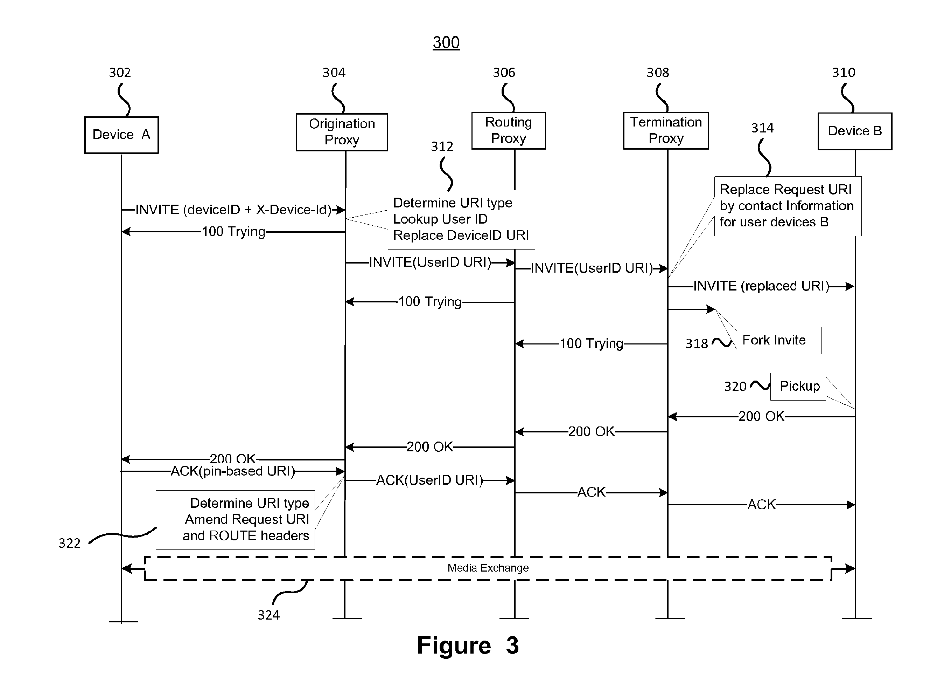

Figure 3 depicts a message flow of initiating a dialog establishment with a plurality of destination devices. The message flow 300 assumes that the dialog is established between two devices using SIP. In Figure 3, it is assumed that a user of an initiating device, Device A 302, wishes to contact a destination user of Device B 310, which could be for example an office phone, a softphone on a laptop computer, or a portable device. Although only a single destination device, Device B 310, is depicted, it is assumed that the destination user has registered a plurality of devices with a SIP server using their user identifier. As such, when a SIP call is initiated with the user identifier, the call is forked to each of the destination user's devices. Further, it assumed that the destination user has a device, which may or may not be registered with the SIP server that has a device identifier that is linked to the user identifier and that the user initiating the dialog only has access to the device identifier for contact information.

A user of the initiating device, Device A 302, initiates a dialog establishment process with a destination user. The destination user may be selected from a list of available contacts on the initiating device that includes the destination device identifier linked to the destination user. Alternatively, the user of the initiating device A 302 could input the destination device identifier of the destination user using a keyboard or other input means. The initiating device 302 sends a dialog establishment request to an origination proxy server 304. The origination proxy server 304 may be a SIP proxy server that can receive and process dialog establishment requests. The dialog establishment may be a SIP INVITE message that includes a uniform resource identifier (URI) used in specifying the intended destination of the dialog. The INVITE message contains the destination device identifier of the destination user as well as an indication that the URI is a device identifier, as opposed to a user identifier. The originating proxy 304 receives the INVITE message and responds with a 100 Trying message indicating that it is attempting to establish the dialog. The originating proxy 304 receives and processes the INVITE request. The originating proxy uses the URI type indicator to determine that the URI is a device identifier, and so should be resolved to a user identifier. It is contemplated that the URI type indicator, or other information in the INVITE message, could indicate that although the URI is a device ID it should not be resolved to a user identifier so that only the device with the device identifier will be contacted for the dialog establishment. When the origination proxy 304 determines that the URI is a device identifier that should be resolved it looks up the user identifier that is linked with the device identifier. The lookup may be done by the origination proxy 304 if it has access to a table or database of device identifiers and linked user identifiers. Alternatively, the origination proxy 304 may pass the destination device identifier to another component, such as the ID resolution server 230 described above to perform the lookup and return the destination user identifier linked to the destination device identifier. Once the origination proxy has the destination user identifier linked to the destination device identifier, it modifies the INVITE message in order to replace the destination device identifier URI with the destination user identifier URI 312. The INVITE message is also modified to replace the URI type indicator in order to indicate that the URI is a user identifier. The modified INVITE message is routed to the termination proxy 308 of the destination user through one or more routing proxies 306. Once the modified INVITE message is received at the termination proxy 308, the INVITE message may be further modified to replace routing information in the INVITE message with a contact address of a destination device registered with the destination user identifier 314. If the destination user has registered multiple destination devices or contact addresses with the destination user identifier, the modified INVITE message is forked to each of the contact addresses 318. It is noted that when a device receives a new INVITE message it may return a 100 Trying message to indicate that a dialog is attempting to be established.

The modified INVITE messages are received at each of the destination user's registered devices. It is noted that only a single destination device, Device B 310 is depicted. When the modified INVITE is received, the destination device 310 may provide a notification, such as playing a ring tune. As depicted in Figure 3, the destination user picks up 320, or accepts the INVITE message, at one of the destination devices. The destination device sends a 200 OK message back to the termination proxy 308. If the INVITE message was forked to other destination devices or contact addresses, the termination proxy 308 may notify the other destination devices 310 that the call was answered in order to terminate the dialog establishment process with the other destination devices. The termination proxy 308 routes the 200 OK back to the initiating device, Device A 302. When the initiating device receives the 200 OK message it sends an acknowledgment message, ACK, back to the origination proxy 304, which is routed back to Device B, 310. It is noted that the initiating device 302 includes the destination device identifier in the ACK message, which the originating proxy 304 again resolves to the linked destination user identifier and modifies the ACK message accordingly 322. It is contemplated that the originating proxy could alternatively provide the linked destination user identifier back to the initiating device once it is resolved, and as such, the initiating device 302 could include the destination user identifier in the ACK message, rather than requiring the origination proxy to resolve the destination user identifier from a destination device identifier. Whether or not the resolved user identifier can be returned to the device may be a configurable option to provide users with the ability to control who has access to their user identifier.

As will be appreciated, the exchange of the SIP messages allows a dialog to be established between the two devices, Device A 302 and Device B 310. Once the dialog is established, it can be used to establish an exchange of media directly between the two devices. The media may be audio and video, providing a video chat; just audio, providing a voice call; just video, or other types of data including text messages and files.

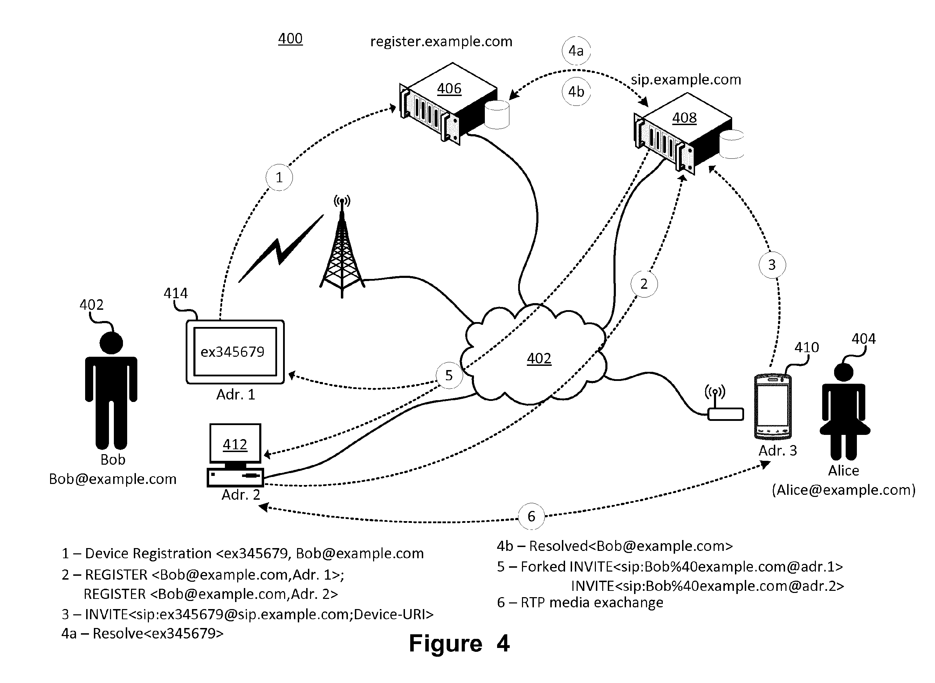

The message flow of Figure 3 will be further described by way of a specific example, with reference to Figure 4. It will be appreciated that the specific example described further below is intended merely to further describe the process for initiating a dialog with a plurality of devices. The process described above may be used in implementations other than that described below.

Figure 4 depicts illustrative components in an environment for initiating a dialog establishment with a plurality of devices. In describing the environment 400, it is assumed that Alice 404 wants to contact Bob 402, and that Bob 402 wants all of his devices to ring when someone attempts to contact him. As depicted, Bob 402 has two devices including a tablet 414 that has a device identifier, namely 'ex334579'. At some point in time, typically upon an initial use of the tablet 414, Bob sets up the tablet. The process of setting up the tablet 414 may include registering the device with a server 406. The tablet may send a device registration message (1) to the registration server, which includes the device identifier and the user's user identifier. The registration server 406 receives and stores the information, linking the device identifier with the user identifier.

In addition to linking the user identifier to the device identifier, Bob also registers the contact addresses of his devices, 414, 412 with the SIP server 408 (2). The registration may be accomplished using a SIP REGISTER messages. A user can register and un-register devices with the SIP server 408. As depicted Bob sends REGISTER messages that associate his user identifier with the contact addresses of his two devices, Adr. 1, Adr. 2. The contact addresses may comprise internet protocol (IP) addresses of the devices or persistent connection to the device, or may comprise other contact address information depending on the type of protocol used to communicate with the respective device.

Once Bob 402 has registered one or more of his devices 414, 412, Alice 404 can attempt to establish a communication session with Bob via her device 410. The communication session could be used to provide a video chat between two devices 414, 412. Alice may only have access to Bob's device identifier and so uses it when attempting to establish the dialog. Alice's device sends a SIP INVITE message (3) to the SIP server 408. The SIP INVITE message includes a URI for use in establishing the dialog. The URI may include information for use in routing the message to a SIP server 408, such as sip.example.com, as well as the destination device identifier of Bob's device 414. The SIP INVITE message may also include an indication that the URI includes a device identifier that should be resolved to a user identifier. The SIP server receives the SIP INVITE message and determines that the URI should be resolved and communicates with the registration server 406. The SIP server 408 sends a resolution request to the registration server (4a), which determines the destination user identifier that was previously linked to the destination device identifier, for example during the setup of device. Once the registration server 406 determines the destination user identifier linked to the destination device identifier, it can provide the resolved destination user identifier back to the SIP server (4b). The SIP server modifies the received SIP INVITE message by replacing the destination device identifier with the resolved destination user identifier. If the destination user identifier contains one or more special characters, such as the '@' sign, they may need to be escaped, for example by replacing with '%40. The SIP server 408 may then determine which devices, or more particularly what contact addresses the INVITE message should be sent to. The SIP server 408 determines the contact addresses that are registered with the destination user identifier of the modified INVITE message and sends the INVITE message to the appropriate location. If multiple contact addresses have been registered to the destination user identifier, the SIP server forks the request to each of the registered contact addresses (5). It is noted that Bob's device having the destination device identifier, namely tablet 414 does not need to be registered with the SIP server. The dialog establishment may still succeed since other devices would be determined from Bob's user identifier that is resolved from the device identifier. Once the devices receive the INVITE message, they may begin notifying Bob 402 that Alice 404 is attempting to contact him. Both destination devices 402, 412 may ring or provide other notifications. Bob answer's the call on device 412, and a real-time transport protocol session may be established between Alice's device 410 and Bob's device 412 (6). The session may be used to transfer audio and video of a video chat directly between the two devices. As will be appreciated, the registration of a device that links the device identifier to the user identifier may be a separate process from the registration of devices with the SIP server for a user. As such, a user does not need to register the device having the device identifier linked to the user identifier with the SIP server. A SIP call initiated with the device identifier can be sent to a plurality of different devices, which do not need to include the device having the device identifier the call was initiated to.

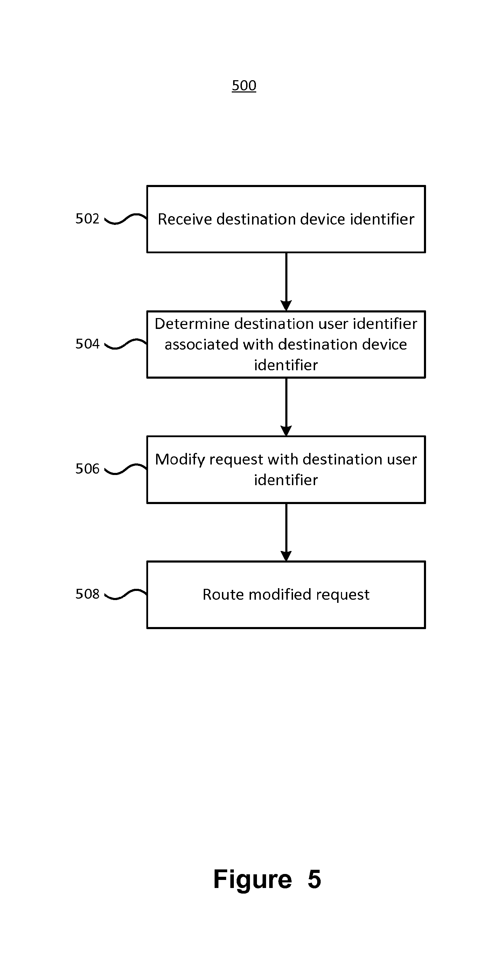

Figure 5 depicts a method of initiating a dialog establishment with a plurality of destination devices. The method 500 may be used to initiate a dialog establishment with a plurality of devices even if the calling party only has a device identifier of a destination device of the destination party. The method 500 assumes that information is available linking a device identifier to a user identifier. Further it is assumed that one or more devices, or more particular contact addresses of devices, has been registered with the user identifier, the registered contact addresses indicating the addresses at which contact should be attempted when establishing a session with the user.

The method 500 begins with receiving a destination device identifier (502) from an initiating device. The destination device identifier can be received as a request to establish a dialog with the destination device identifier. The request may further include an indication that the destination device identifier should be resolved to a destination user identifier if possible. Once the destination device identifier is received at a server, the destination user identifier linked with the destination device identifier is retrieved (504), and the request is modified by replacing the destination device identifier with the linked destination user identifier (506). The modified request may then be routed to one or more devices registered with the destination user identifier (508). The routing may include sending the modified INVITE message to the contact addresses that have been registered with the user identifier. Once the destination devices receive the invite requests, the destination user can answer or accept the request on one of the devices. A session can be established for transferring data, including audio and video data, directly between the two devices.

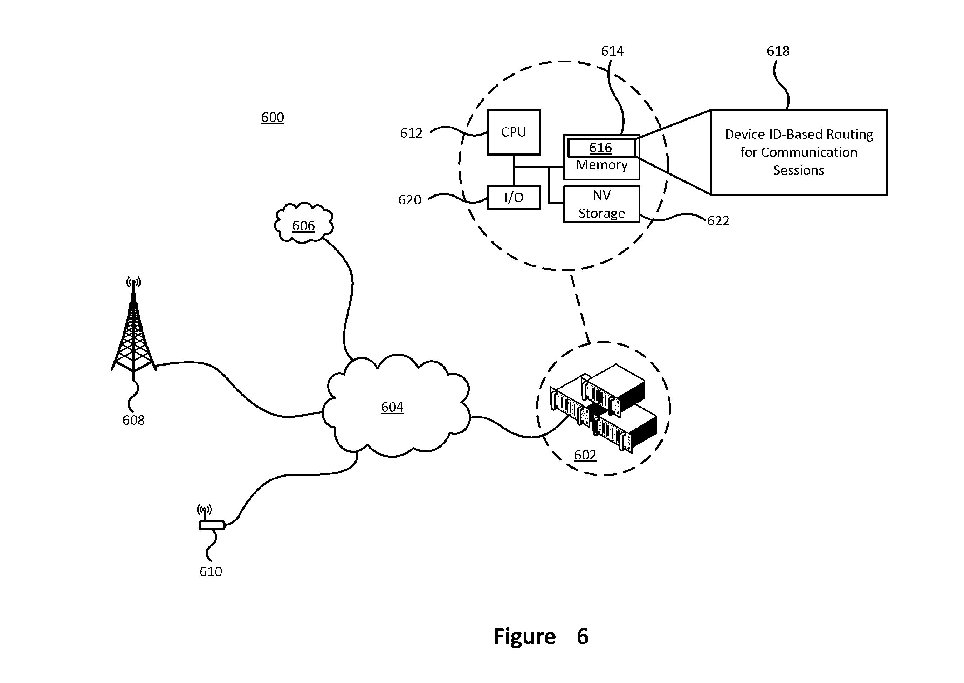

Figure 6 depicts an environment in which the dialog establishment described above may be implemented. The environment 600 may include a plurality of servers 602 of computers that provide the functionality described above. The server 602 may be connected to a network 604. The servers 602 can communicate with various different devices using different infrastructure connected to the network 604. For example the infrastructure may include a wireless mobile network infrastructure 608, such as a Code Division Multiple Access (CDMA) network, Global System for Mobile Communications (GSM) network, a High Speed Packet Access (HSPA) network, or a Long Term Evolution (LTE) network. The infrastructure may also include one or more wired networks 606 or wireless networks 610.

Although the functionality may be provided by a plurality of servers 602, collectively they may be viewed as providing a central processing unit (CPU) 612 for executing instructions 616 stored in memory 614. The instructions, when executed by the CPU 612 configure the servers 602 to provide the device identifier based dialog establishment with multiple devices described above. The servers may further include non-volatile storage 622 for storing information, for example the information linking a device identifier to a user identifier, as well as information of contact addresses registered with a user identifier.

In some embodiments, any suitable computer readable media can be used for storing instructions for performing the processes described herein. For example, in some embodiments, computer readable media can be transitory or non-transitory. For example, non-transitory computer readable media can include media such as magnetic media (such as hard disks, floppy disks, etc.), optical media (such as compact discs, digital video discs, Blu-ray discs, etc.), semiconductor media (such as flash memory, electrically programmable read only memory (EPROM), electrically erasable programmable read only memory (EEPROM), etc.), any suitable media that is not fleeting or devoid of any semblance of permanence during transmission, and/or any suitable tangible media. As another example, transitory computer readable media can include signals on networks, in wires, conductors, optical fibers, circuits, and any suitable media that is fleeting and devoid of any semblance of permanence during transmission, and/or any suitable intangible media.

Although the description discloses example methods, system and apparatus including, among other components, software executed on hardware, it should be noted that such methods and apparatus are merely illustrative and should not be considered as limiting. For example, it is contemplated that any or all of these hardware and software components could be embodied exclusively in hardware, exclusively in software, exclusively in firmware, or in any combination of hardware, software, and/or firmware. Accordingly, while the following describes example methods and apparatus, persons having ordinary skill in the art will readily appreciate that the examples provided are not the only way to implement such methods and apparatus.

## Claims

1. A method of initiating a dialog establishment with a plurality of devices comprising:
receiving (502) from an initiating device (104) a destination device identifier (114a) in a request (218) to establish the dialog;
retrieving (504) a destination user identifier linked (234) with the received destination device identifier;
modifying (506) the request by replacing the destination device identifier with the destination user identifier; and
routing (508) the modified request to one or more destination devices (110a, 110b, 110c, 110d) registered with the destination user identifier.

2. The method of claim 1, wherein the request to establish the dialog comprises an indication that the request includes the destination device identifier.

3. The method of claim 1 or 2, wherein initiating the dialog with each of the destination devices comprises forking the request to each of the determined communication addresses of the one or more destination devices.

4. The method of any one of claims 1 to 3, wherein the communication session is established using Session Initiation Protocol (SIP) messages.

5. The method of any one of claims 1 to 4, wherein the destination device identifier in the request is retrieved from contact information stored on the initiating device.

6. The method of any one of claims 1 to 5, further comprising registering a new user identifier comprising:
receiving a registration device identifier of a device to be linked to the user identifier;
determining if the registration device identifier is already associated with a previous user identifier;
updating stored information to link the registration device identifier with the new user identifier when the registration device identifier is already associated with the previous user identifier; and
storing new information linking the registration device identifier with the new user identifier when the registration device identifier is not associated with the previous user identifier.

7. The method of any one of claims 1 to 6, wherein the destination device identifier is a unique private address assigned by a device manufacturer.

8. The method of any one of claims 1 to 7, wherein the destination user identifier is a SIP address.

9. The method of any one of claims 1 to 8, wherein the destination device identifier is a unique personal identification number (PIN) associated with one destination device.

10. A computing system (602) for initiating a dialog establishment with a plurality of devices comprising:
a memory (614) for storing instructions (616); and
a processor (612) coupled to the memory, the instructions when executed by the processor configuring the computing system to provide the method of any one of claims 1 to 9.

11. A non-transitory computer readable memory containing instructions for execution by a computer device for providing the method of any one of claims 1 to 9.
